# EUROPEAN PATENT APPLICATION

(11) **EP 2 145 966 A1**
(43) Date of publication of application: **20.01.2010**
(21) Application number: 09425277.2
(22) Date of filing: 10.07.2009
(51) Int. Cl.: C21D 9/00, C21D 1/773, B32B 17/10

(54) **Apparatus for the production of laminated glass**

(30) Priority: 14.07.2008 IT RM20080379
(71) Applicant: F&C S.r.l., 00040 Pomezia (RM) (IT)
(72) Inventor: Mazzaroppi, Antonio, 00040 Pomezia (RM) (IT)
(74) Representative: Iannone, Carlo Luigi

(57) **Abstract**

The invention concerns an apparatus for the production of laminated glass, comprising a suspended furnace (230) and two or more containers for glasses (210,220), **characterised in that** each container for glasses (210,220) is provided with means for creating vacuum inside it, said containers for glasses (210,220) are fixed and the suspended furnace (230) is displaceable on one of said containers for glasses alternatively.

The invention further concerns a relevant process for the glass lamination.

## Description

The present invention concerns an apparatus for the production of laminated glass.

More in detail, the invention relates to an apparatus that allows the production of laminated glass in an efficient way, thus saving room, energy, and increasing productivity and product quality.

Processes are known for the lamination of glass, as for example that described in the patent document US4642255A1.

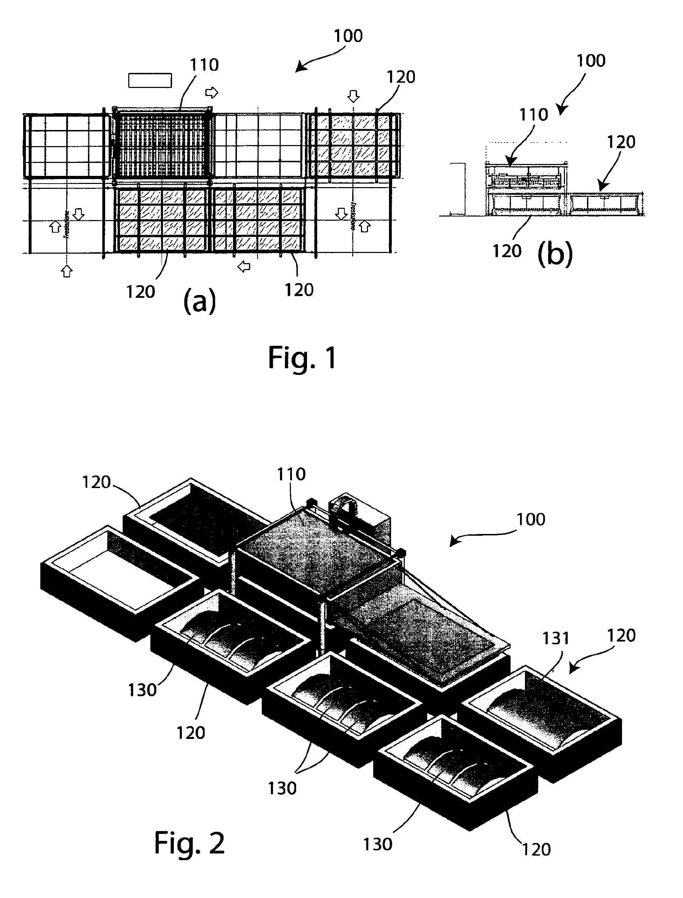

More in detail, making reference to figures 1 and 2, an apparatus for glass lamination 100 according to the prior art comprises a suspended furnace 110 and a plurality of bogies 120 transporting glasses 130,131. The bogies of such a plurality of bogies 120 are alternatively moved under and inside said suspended furnace 110. When the bogie is under the furnace, vacuum is created and subsequently one heats the furnace in order to perform the lamination. Once the heating step is terminated, the bogie with the glasses 130,131 is moved according to the arrows indicated in figure 1 (a). In such a way, one performs a rotation allowing to manage the loading, lamination, and unloading steps.

One notes immediately that, in such a particular case, the space needed to such a process is wide, around 8 times the surface of a bogie 120.

Still another type of apparatus for glass lamination comprises a fixed furnace wherein a multi-level, thus allowing a larger production. In such a case, as it will be taken up later on, all the glasses in the bogie will be treated by using the same treatment parameters; in the case of different glasses in the bogie, therefore, the parameters will be set to an average value that can be enough good for all ones but it is not excellent for anyone, to the detriment of the quality of the final glass.

Concerning the lamination process as such, normally it provides for a first cycle with the following steps:
- Vacuum creation;
- Heating;
and a second cycle with the following steps (equal to the preceding ones):
- New vacuum creation;
- New heating.

Between a cycle and the other, a cooling step is appropriately performer, which is necessary to correctly realize the subsequent vacuum step, in such a way that this is apt to eliminate the humidity before that the glass edges glue to each other. This is because the humidity hinders a correct gluing of the glass sheets.

The vacuum creation serves to remove the humidity and the air in the space between the glasses that are gluing to each other, thus allowing a correct and complete gluing of the same.

In the apparatus of figures 1 and 2, the vacuum is created when the bogie 120 is inside the furnace 110, little before the heating step.

This does not constitute as such a problem if one does not have requirements of large or high quality production. Indeed, if all the steps above listed are performer with the needed times, comprising the time necessary to the cooling before the second cycle of vacuum/heating, then one obtains a high-quality glass.

The times of the total treatment in such a case are however evidently very long, and one is not able to produce more than some glasses per day.

In order to guarantee a profitable production, these plants are consequently used in a qualitatively sub-optimal way, the vacuum, low-temperature gluing step is minimized and the cooling between the two cycles is almost non-existent. This necessarily implies the production of a low-quality glass or a glass produced by using only a type of plastic (with the term "plastic" one refers to the material that is interposed between the glasses and that by melting allow the gluing).

Moreover, in order to exploit at best such plants of the prior art, one has tried to minimize at the greatest extent the number of bogies and the needed spaces. This can be realized by using a configuration of linear processing, in which at least two bogies 120 and three spaces are needed: while a bogie for example is subjected to the vacuum step and the heating step under the furnace, the other one, which has just exited the furnace is unloaded and/or is let cool down. When the second boogie is made re-enter the furnace, the first one is moved on the other side. Three spaces and two bogies are altogether exactly needed. In any case, no matter how much one reduces the vacuum step, this will take a certain time and the duration of the entire cycle will be accordingly influenced. Moreover, as already explained, and this is the most important consequence, a too short vacuum step does not allow the correct elimination of the humidity and air.

It remains therefore the necessity o fan apparatus and relevant process for the production of laminated glass, which allows a quality production without renouncing to the productivity.

It is object of the present invention an apparatus for the production of laminated glass which solves the problems and overcomes the drawbacks of the prior art.

It is object of the present invention a process for the continuous industrial production of laminated glass which solves the problems and overcomes the drawbacks of the prior art.

It is subject-matter of the present invention an apparatus for the production of laminated glass, comprising a suspended furnace and two or more container for glasses, **characterised in that** each container for glasses is provided with means for creating vacuum inside it, said containers for glasses are fixed and the suspended furnace is displaceable on one of said containers for glasses alternatively.

In particular:
- The two (or more) containers for glasses are containers that are substantially open on the top and therefore able to form each time a closed chamber when the suspended furnace is lowered on one of them;
- The two (or more) containers are fixed; therefore the loading/unloading operations must provide means that are able to load them in their fixed position, from the above since they are open on the top side.

In such a way one does not need - nor it is possible any longer - to enclose the entire system in an external casing, as in the prior art, thus saving costs of production and maintenance, that is remarkably simplified.

Concerning the creation of the vacuum, this can be created inside the whole container for glasses, or, more advantageously, the glasses can be closed within silicone bags, wherein the vacuum is created, the bags being then placed inside the containers for glasses. This, among others, has the advantage that the vacuum is created by using a smaller amount of energy, due to the fact that the vacuum has to be created in a much smaller volume (the bags wherein vacuum has been created adhere at least partially to the glasses). The means for the creation of the vacuum are certainly provided inside said containers for glasses, but are used to create vacuum in said bags.

In such a way, one can use a convective heating or radiative/convective mixed heating inside the containers for glasses, since one heats the bags from outside and therefore indirectly the glasses.

The means for the creation of vacuum can be used when the furnace is lowered on the container or even while the suspended furnace is working with the other contained.

The contained for glasses can be further provided with a closing panel, that is useful to create vacuum if the bags are not used, or only for a simple closure of the containers for glasses.

All this allows moreover to maintain the two alternative treatment chambers as separate, without the need that anything must pass from a chamber the other (neither the treatment means nor the materials to be treated).

The treatment chambers are fixed by construction, they are not movable for the loading or unloading of the glasses to be laminated. In particular, the containers for glasses are not movable and therefore it is not possible for example to vary their mutual distance, which is kept constant from a treatment cycle to the other, in particular they are fast connected.

This implies that the whole apparatus cannot be enclosed in a total, comprehensive chamber, owing to the fact that one could not correctly perform the operations of loading/unloading. Indeed, in the prior art, when there is an overall chamber enclosing the containers for the glasses and the furnace, such containers are movable (e.g. they are slidable on guides), in order to be able to be loaded outside.

The production of the apparatus and its maintenance are thus remarkably simplified, and the operation costs are lower.

Preferably according to the invention, the suspended furnace presents lateral supports at whose ends sliding means are provided for the sliding on corresponding guides.

Preferably according to the invention, said guides are provided on the ground.

Preferably according to the invention, said guides are fixed laterally to said two or more containers for glasses.

Preferably according to the invention, said containers for glasses present an upper mobile panel hinged on a side of the same container for glasses, for the loading/unloading of the glasses and for the creation of the vacuum, said upper mobile panel being suitable to be opened substantially up to 90°with respect to the closure position that is parallel to the ground.

Preferably according to the invention, the apparatus utilises two containers for glasses.

Preferably according to the invention, the apparatus utilises three containers for glasses.

It is further specific subject-matter of the present invention a process for the continuous industrial production of laminated glass, comprising for each set of glasses to be treated the performing of two subsequent cycles by the following steps:
A. subjecting the glasses to vacuum before gluing;
B. subjecting the glasses to heating for the tempering and gluing,
in that it utilises the apparatus according to any preceding claim 1 to 7, and therefore at least a first container for glasses and a second container for glasses, and in that:
- step A for the glasses of the first container for glasses is performed by creating vacuum in said first container for glasses, while the mobile suspended furnace heats said second container for glasses realising step B for the glasses of the second container for glasses that already undergone the preliminary vacuum phase, and
- step B for the glasses of said first container for glasses is performed by displacing said suspended furnace on said first container for glasses, while in said second container for glasses vacuum is created, thus performing step A for the glasses of the second container for glasses,
the repetition of steps A and B being obtained by displacing again the suspended mobile furnace on a container for glasses and creating the vacuum in the other one, once terminated steps A and B for the set of glasses of a container, these glasses being unloaded from the support and being replaced by other glasses to be treated according to the same cycles, realising in such a way a continuous cycle of production.

Preferably according to the invention, the process comprises the utilisation of three containers for glasses, a first container for glasses being subjected to a heating in the suspended mobile furnace while a second container for glasses performs the preliminary vacuum step A and a third container for glasses is subjected to the loading/unloading of glasses to be treated/finished.

The invention will be now described by way of illustration but not by way of limitation, making particular reference to the figures of the annexed drawings, wherein:
- figure 1 shows a scheme of the apparatus for the lamination of glass according to the prior art, in (a) as seen from above with indication of the bogies movements, and in (b) as seen in its cross- section;
- figure 2 shows a plant similar to that of figure 1, as seen in perspective;
- figure 3 shows an embodiment of the apparatus according to the invention, in a first operative position;
- figure 4 shows the embodiment of figure 3, in a second operative position;
- figure 5 shows the embodiment of figures 3 and 4, in a perspective view.

In the figures, equal numerical references are used to indicate identical elements.

Contrary to the prior art as described in figures 1 and 2, in the case of the present invention the suspended furnace itself (radiative and/or convective heating) moves and alternately position on the containers for glasses.

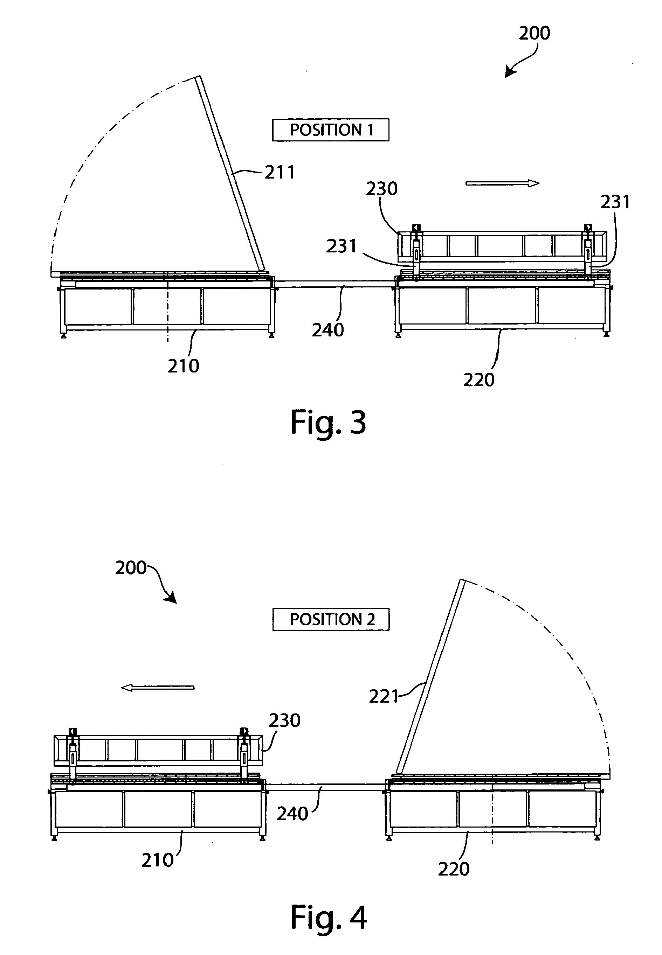

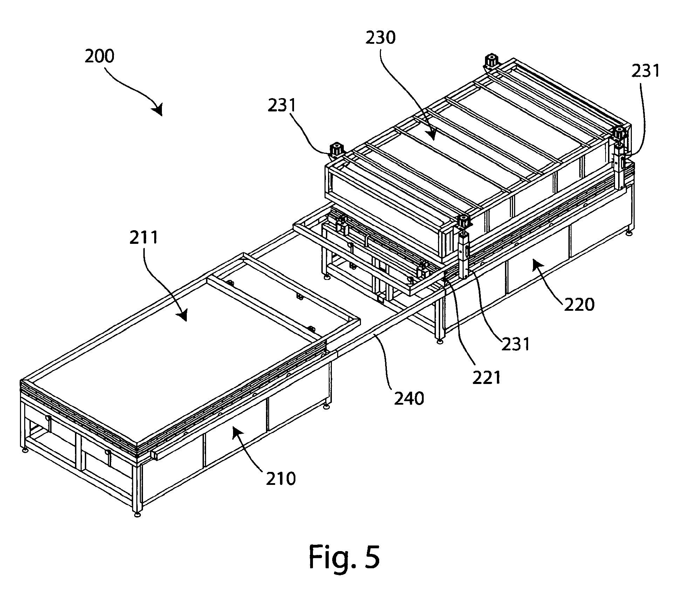

Making reference to the specific embodiment of figures 3 to 5, the apparatus 200 according to the invention comprises two fixed containers for glasses 210,220, and a suspended furnace 230 which is able to position on one or the other container 210,220 by sliding on a guide 240 that is fixed along the sides of the two containers 210,220. The guide can also be provided on the ground and not on the sides of the containers, but it is clear that in this case the positioning of the apparatus is constrained.

This feature allows to separate physically the step of vacuum creation from the step of glasses heating. Obviously, one continues to make the vacuum during the heating, but the glasses initiating the heating step have already undergone a vacuum step that is sufficiently long and most of all far away from the heat sources, what allows then an ideal gluing of the same thanks to the complete elimination of the humidity and air.

Moreover, the arrangement according to the invention allows having only two containers for glasses, which correspond to the bogies of the prior art but are kept fixed.

Indeed, such containers for glasses are constituted in such a way that they can be closed and one can create vacuum inside them, independently from where the suspended furnace is. Thus, while a container 210,220 stands below the furnace 230 and is therefore busy during the heating step, the other one 210,220 can be used for the vacuum step of further glasses.

In the prior art, the vacuum is created in a bag enclosing the glasses, inside the bogies. In the case of the present invention, the containers 210,220 can be provided with such a bag or, more conveniently, they are closed by means of a movable upper flat door 211, 221.

One starts then the productive cycle with a container 210 or 220 that creates the vacuum, subsequently one moves the furnace 230 above it and the heating starts. The other container is then utilized for the vacuum step. One exchanges thereafter the position of suspended furnace 230, and so on for the second cycle and for two new cycles on two sets of "new" cycles. The productive cycle is in such a way continuous, owing to the fact that glasses in each container 210,220 are always subjected to a step, be it the vacuum, heating, loading or unloading one.

In such a way, after a heat gluing step, the completed glasses are unloaded and the new ones to be glued are loaded. At this point one closes the movable upper flat door 211, 221 and a vacuum step starts in a low temperature zone, just because in a zone outside the furnace (only close or adjacent to).

This makes so that the humidity is correctly eliminated, before the subsequent heating.

Moreover, one does not need at least three spaces any longer like in the prior art, to maintain the furnace constantly busy. For such a reason, and because the preparation vacuum step and the heating step (during which however one continues making vacuum) have been separated, one succeeds to maximize the production. Two spaces are indeed sufficient, because one separated the vacuum step from the heating step.

Needless to say, it is now possible to devote to each step the needed time.

The furnace is moved by hand or in a motorized way by making it slide, by suitable supports 231, on the ground a terra on suitable tracks or tracks 240 fixed higher on the same supports, thus avoiding to modify the space on the ground.

The flat door 211, 221 of the support is fixed to the support in such a way that it is possible to raise it substantially up to 90°, so that an arm with a sucker can catch and move the glasses from inside the container to another station of the whole plant.

Till now one has described a production cycle utilizing two containers. In fact, it is possible to perform a continuous cycle with more than two containers. For example, with three containers, one can start by creating vacuum in a first container, then heating it, while vacuum is created in a second container; one can then pass to the heating of the second container while the first and the third container perform vacuum. Once the heating of the third container has been achieved, one starts again heating the first container and so on for the second cycle. Obviously, once finished the second cycle for a container, one performs the product unloading step and the loading step for the same container.

The advantages obtained by the present invention are the following:
- Low cost of the apparatus, tank to the fact that one can use two glass supports only;
- Compactness of the apparatus therefore reduced space requirements for the production;
- Easiness and fluency of use;
- Ones starts creating the vacuum without heating (therefore not in the furnace) with remarkable improvement of the glass sheets gluing, and the possibility of using different types of plastic;
- reduced consumption of energy.

The reduced energy consumption is due to the overall optimisation of the production cycle: optimisation of the moves (only the suspended furnace moves), optimization of the production parameters for each single type of laminated glass. Indeed, there exist machines of the prior art which comprise more glass support planes, to be inserted in the furnace; the parameters of heating and of the vacuum are then chosen so as to provide an average with respect to the needs of the single types of glass. On the contrary, in the present invention, the parameters can be optimized for each single type of glass, and due to the easiness of performance of the cycle also the program can be easily changed for different types of glass.

This obviously does not impede that a multi-level can be utilized even in the frame work of the present invention, both for the same typology of product, and simultaneously for different products.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Apparatus for the production of laminated glass, comprising a suspended furnace (230) and two or more containers for glasses (210,220), **characterised in that** each container for glasses (210,220) is provided with means for creating vacuum inside it, said glass containers (210,220) are fixed and the suspended furnace (230) is displaceable on one of said containers for glasses alternatively.

2. Apparatus according to claim 1, **characterised in that** the suspended furnace (230) presents lateral supports (231) at whose ends sliding means are provided for the sliding on corresponding guides (240).

3. Apparatus according to claim 2, **characterised in that** said guides are provided on the ground.

4. Apparatus according to claim 2, **characterised in that** said guides (240) are fixed laterally to said two or more containers for glasses (210,220).

5. Apparatus according to any claim 1 to 4, **characterised in that** said containers for glasses (210,220) present an upper mobile panel (211,221) hinged on a side of the same container for glasses, for the loading/unloading of the glasses and for the creation of the vacuum, said upper mobile panel (211, 221) being suitable to be opened substantially up to 90°with respect to the closure position that is parallel to the ground.

6. Apparatus according to any claim 1 to 5, in that it utilises two containers for glasses (210,220).

7. Apparatus according to any claim 1 to 6, in that it utilises three containers for glasses (210,220).

8. Process for the continuous industrial production of laminated glass, comprising for each set of glasses to be treated the performing of two subsequent cycles by the following steps:
A. subjecting the glasses to vacuum before gluing;
B. subjecting the glasses to heating for the tempering and gluing,
in that it utilises the apparatus (200) according to any preceding claim 1 to 7, and therefore at least a first container for glasses (210) and a second container for glasses (220) for the containment of glass, and in that:
- step A for the glasses of the first container for glasses (210) is performed by creating vacuum in said first container for glasses, while the mobile suspended furnace (230) heats said second container for glasses (220) realising step B for the glasses of the second container for glasses (220) that already undergone the preliminary vacuum phase, and
- step B for the glasses of said first container for glasses (210) is performed by displacing said suspended furnace (230) on said first container for glasses (210), while in said second container for glasses (220) vacuum is created, thus performing step A for the glasses of the second container for glasses (220),
the repetition of steps A and B being obtained by displacing again the suspended mobile furnace (230) on a container for glasses and creating the vacuum in the other one, once terminated steps A and B for the set of glasses of a container (210,220), these glasses being unloaded from the support and being replaced by other glasses to be treated according to the same cycles, realising in such a way a continuous cycle of production.

9. Process according to claim 8, **characterised in that** it comprises the utilisation of three containers for glasses, a first container for glasses being subjected to a heating in the suspended mobile furnace (230) while a second container for glasses performs the preliminary vacuum step A and a third container for glasses is subjected to the loading/unloading of glasses to be treated/finished.
